# EUROPÄISCHE PATENTSCHRIFT

(11) **EP 3 586 015 B1**
(45) Veröffentlichungstag und Bekanntmachung des Hinweises auf die Patenterteilung: **17.03.2021**
(21) Anmeldenummer: 18704191.8
(22) Anmeldetag: 01.02.2018
(51) Int. Cl.: F16B 25/00

(54) **SCHRAUBE**
SCREW
VIS

(30) Priorität: 21.02.2017 DE 102017103526
(43) Veröffentlichungstag der Anmeldung: 01.01.2020
(73) Patentinhaber: fischerwerke GmbH & Co. KG, 72178 Waldachtal (DE)
(72) Erfinder: KRUMBECK, Markus, 72202 Nagold (DE); SCHNEIDER, Mattias, 72213 Altensteig (DE)
(86) Internationale Anmeldenummer: PCT/EP2018/052536
(87) Internationale Veröffentlichungsnummer: WO 2018/153635

(56) Entgegenhaltungen:
- EP-A1- 0 939 235
- US-A1- 2006 140 741

## Beschreibung

Die Erfindung betrifft eine Schraube mit den Merkmalen des Oberbegriffs des Anspruchs 1. Insbesondere betrifft die Erfindung eine selbstschneidende Schraube, deren Gewinde sich ein Gegengewinde in Werkstoffen wie beispielsweise Holz oder Kunststoff selbst schneidet.

Die Patentanmeldung EP 0 939 235 A1 offenbart eine selbstschneidende Schraube mit einem Schraubenschaft, einem Schraubenkopf an einem hinteren Ende des Schraubenschafts, einer kegelförmigen Schraubenspitze an einem vorderen Ende des Schraubenschafts und einem Schraubengewinde, das an einem vorderen Ende der Schraubenspitze beginnt und bis etwa in eine Längsmitte des Schraubenschafts reicht. Außerdem weist die bekannte Schraube im Querschnitt sägezahnförmige Rippen auf, die unter einem Winkel von 5° oder mehr zu einer Längsachse der Schraube verlaufen und sich über die Schraubenspitze und einen kurzen Teil einer Länge des Schraubenschafts erstrecken. Die Sägezahnform der Rippen ist einer Einschraubrichtung der Schraube entgegen gerichtet und die Rippen winden sich entgegengesetzt zum Schraubengewinde. Eine radial zur Schraube gesehen äußere Kante der Rippen bildet eine Schneide, die bei einem Einschrauben der Schraube in einen Ankergrund ein Kernloch für den Schraubenschaft schneidet. Die Schneiden stehen radial zur Schraube gesehen über den Schraubenschaft über, so dass ein von den Schneiden geschnittenes Kernloch einen größeren Durchmesser als der Schraubenschaft aufweist.

Aufgabe der Erfindung ist, eine insbesondere selbstschneidende Schraube vorzuschlagen, die sich gleichermaßen zum Einschrauben in Holz und zur Verwendung in einem Spreizdübel aus Kunststoff eignet.

Diese Aufgabe wird erfindungsgemäß durch die Merkmale des Anspruchs 1 gelöst. Die erfindungsgemäße Schraube weist einen Schraubenschaft, eine Schraubenspitze, die sich an ein vorderes Ende des Schraubenschafts anschließt, und ein Schraubengewinde auf, das ein- oder mehrgängig sein kann und das sich von der Schraubenspitze aus zumindest über einen Teil einer Länge des Schraubenschafts erstreckt. An den Teil des Schraubenschafts mit dem Schraubengewinde kann sich somit ein gewindeloser Teil anschließen. Mit "Schraubenspitze" ist hier nicht der vorderste Punkt der Schraube gemeint, sondern der insbesondere konische Übergangsbereich von dem vordersten Punkt der Schraube bis zum Schraubenschaft. "Von der Schraubenspritze aus" meint, dass das Schraubengewinde an einem vorderen Ende, dem vordersten Punkt der Schraube, oder an einem hinteren Ende, also am Übergang zum Schraubenschaft, oder dazwischen beginnen kann. "Vorne" und "hinten" bezieht sich hier stets auf die Einschraubrichtung. Ist im Weiteren von dem "Schraubenschaft" die Rede, ist dies stets so zu verstehen, dass das Schraubengewinde nicht Teil des Schraubenschafts ist. Das gleiche gilt für die Schraubenspitze.

Die Schraubenspitze muss nicht mit einer Spitze enden, sondern kann beispielsweise auch die Form eines Kegelstumpfs aufweisen. Entlang der Längsachse der Schraube von vorne nach hinten hat ein gedachter Umkreis um einen Kern-Querschnitt im Bereich der Schraubenspitze einen im Wesentlichen stetig ansteigenden Durchmesser, während er in einem hieran anschließenden Bereich des Schraubenschafts im Wesentlichen konstant ist. Mit dem "Kern-Querschnitt" ist ein Querschnitt der Schraube unter gedanklicher Weglassung des Schraubengewindes und der im Folgenden noch beschriebenen Schneide gemeint.

Des Weiteren weist die erfindungsgemäße Schraube mindestens eine Schneide auf, die in einem Winkel zum Schraubengewinde verläuft. Mit "in einem Winkel" ist gemeint, dass die Schneide nicht parallel zum Schraubengewinde verläuft, das heißt, nicht als Wendel mit derselben Steigung wie das Schraubengewinde. Durch den Winkel zum Schraubengewinde führt die Schneide eine Schnittbewegung bei einem Einschrauben der Schraube in einen Ankergrund aus. Die Schneide kann beispielsweise achsparallel, umlaufend oder wendelförmig, jedoch mit anderer, auch entgegengesetzter Steigung als das Schraubengewinde verlaufen. Zweck der mindestens einen Schneide ist es, beim Einschrauben der Schraube in einen Ankergrund ein Kernloch für den Schraubenschaft frei zu schneiden. Ist der Ankergrund vorgebohrt, oder formt die Schraubenspitze ein Loch in den Ankergrund, weitet die mindestens eine Schneide das Loch auf, sofern es nicht größer ist, als die mindestens eine Schneide es schneiden würde.

Die mindestens eine Schneide erstreckt sich von der Schraubenspitze aus weniger weit über die Länge des Schraubenschafts als das Schraubengewinde, und zwar derart, dass sich an den vorderen Gewindeabschnitt mit mindestens einer Schneide ein schneidenfreier hinterer Gewindeabschnitt anschließt, d. h. das Schraubengewinde reicht vom vorderen Ende des Schraubenschafts weiter nach hinten als die mindestens eine Schneide. Dies schließt nicht aus, dass in einem weiteren Gewindeabschnitt hinter dem hinteren Gewindeabschnitt eine weitere Schneide angeordnet ist. Vorzugsweise beginnt die mindestens eine Schneide zwischen dem vorderen und dem hinteren Ende der Schraubenspitze, also nicht erst am Übergang zum Schraubenschaft, wobei letzteres nicht ausgeschlossen ist. Die Schraubenspitze kann also auch schneidenfrei sein.

Erfindungsgemäß erstreckt sich die mindestens eine Schneide zumindest im vorderen Gewindeabschnitt in radialer Richtung maximal gleich weit wie eine gedachte, zylindrische Mantelfläche eines Kerns im hinteren Gewindeabschnitt. Insbesondere gilt diese maximale radiale Erstreckung auch für die mindestens eine Schneide im Bereich der Schraubenspitze, sofern sie sich bis in die Schraubenspitze hinein erstreckt. Die Schneide kann dort aber auch radial über die zylindrische Mantelfläche hinausstehen. "Radial" meint hier stets eine Richtung senkrecht zur Längsachse der Schraube. Mit dem "Kern" ist hier der betreffende Querschnitt der Schraube unter gedanklicher Weglassung des Schraubengewindes gemeint, also der Querschnitt des Schraubenschafts. Betrachtet wird der Kern, wie er sich über eine wesentliche Länge des hinteren Gewindeabschnitts darstellt, also beispielsweise nicht ein möglicher Übergang zu einem gewindefreien Teil des Schraubenschafts. Bei einem zylindrischen Kern entspricht die Mantelfläche der Umfangsfläche des Schraubenschafts, ansonsten ist die Mantelfläche eine gedanklich umhüllende Zylinderfläche.

Durch diese erfindungsgemäße Dimensionierung der Schneide schneidet sich die mindestens eine Schneide beim Einschrauben in einen Ankergrund ein Kernloch für den Schraubenschaft frei, das nicht größer als der Kern des Schraubenschafts ist. Das Kernloch verringert ein zum Einschrauben der Schraube in den Ankergrund notwendiges Drehmoment, insbesondere bei einem langen Schraubenschaft, weil sie durch das Freischneiden eines Kernlochs eine Reibung zwischen dem Schraubenschaft und dem Ankergrund verringert. Weil das Kernloch nicht größer als der Schraubenschaft ist, spreizt die erfindungsgemäße Schraube einen Spreizdübel aus Kunststoff gut auf.

Die mindestens eine Schneide kann von einer Kante einer wendelförmigen Rippe mit sägezahnförmigem Querschnitt oder einer Kante einer wendelförmigen Nut gebildet sein. Die Aufzählung ist beispielhaft und nicht abschließend.

Gemäß einer Ausgestaltung der Erfindung erstreckt sich die mindestens eine Schneide vom vorderen Ende des Schraubenschafts über eine Länge, die gleich dem ein- bis sechsfachen, insbesondere dem drei- bis fünffachen, des Durchmessers des Schraubenschafts ist. Gemeint ist der Durchmesser der oben genannten Mantelfläche des Kerns im hinteren Gewindeabschnitt. Diese Dimensionierung hat sich als vorteilhaft für das Einschraubverhalten erwiesen.

An Kreuzungsstellen mit der mindestens einen Schneide geht das Schraubengewinde in bevorzugter Ausgestaltung der Erfindung ohne Unterbrechung durch.

In bevorzugter Ausgestaltung der Erfindung weist das Schraubengewinde im vorderen Gewindeabschnitt einen größeren Querschnitt auf als im hinteren Gewindeabschnitt. Beispielsweise ist das Schraubengewinde im vorderen Gewindeabschnitt höher und/oder breiter als im hinteren Gewindeabschnitt. Mit der "Querschnitt" des Schraubengewindes ist ein gedanklicher Schnitt senkrecht zur Längserstreckung des Schraubengewindes gemeint. Bei einer Herstellung des Schraubengewindes und der mindestens einen Schneide durch Umformen eines zuvor zylindrischen Rohlings für den Schraubenschaft kann Werkstoff, der zur Herstellung der mindestens einen Schneide verdrängt wird, zum Schraubengewinde verdrängt werden. Das erleichtert die Herstellung des Schraubengewindes und der mindestens einen Schneide durch Umformen. Auch an der Schraubenspitze kann der Querschnitt des Schraubengewindes größer sein als im hinteren Gewindeabschnitt oder sogar größer als im vorderen Gewindeabschnitt. Wird die Schraubenspitze durch Umformen eines zuvor zylindrischen Werkstücks hergestellt, muss im Bereich der Schraubenspitze mehr Werkstoff umgeformt werden als im Bereich des Schraubenschafts. Ein Schraubengewinde mit größerem Querschnitt erleichtert dies.

Der Schraubenschaft ist vorzugsweise zylindrisch, wobei er im vorderen Gewindeabschnitt einen anderen Durchmesser aufweisen kann als in dem Bereich, der keine Schneide aufweist. Auch zwischen dem Bereich des Schraubenschafts, der das Schraubengewinde aufweist und - sofern vorhanden - einem Bereich, der kein Gewinde aufweist, kann ein Durchmesserunterschied bestehen.

Vorzugsweise weist die erfindungsgemäße Schraube drei oder mehr Schneiden auf, die insbesondere gleichmäßig über einen Umfang verteilt angeordnet sind. Vorzugsweise verlaufen die Schneiden parallel zueinander, insbesondere wendelförmig mit gleichen Steigungen. Denkbar sind allerdings auch Schneiden mit verschiedenen Formen und/oder Verläufen.

Im vorderen Gewindeabschnitt können drei oder mehr Schneiden angeordnet sein, von denen nicht alle, insbesondere nur eine, sich bis innerhalb des Bereichs der Schraubenspitze erstrecken. Vorzugsweise weist die Schraube jedoch drei oder mehr Schneiden auf, die alle innerhalb des Bereichs der Schraubenspitze beginnen, insbesondere im axial mittleren Drittel der Schraubenspitze. Die Schneiden können unterschiedlich lang sein, vorzugsweise sind sie jedoch gleich lang und erstrecken sich über den gleichen axialen Abschnitt. Die Schneiden werden dabei vorzugsweise im Bereich der Schraubenspitze von Rippen und im Bereich des Schraubenschafts durch Kanten an Nuten gebildet.

Die Schneiden, und hier insbesondere Rippen, die die Scheiden bilden, sind insbesondere alle gleich hoch ausgeführt, müssen es aber nicht sein.

Die Erfindung wird nachfolgend anhand eines in der Zeichnung dargestellten Ausführungsbeispiels näher erläutert. Es zeigen:
- Figur 1: eine Schraube gemäß der Erfindung in Seitenansicht; und
- Figur 2: einen Querschnitt eines Schraubenschafts der Schraube aus Figur 1 entlang Linie II-II in größerer Darstellung.

Die in der Zeichnung dargestellte, erfindungsgemäße Schraube 1 ist eine selbstschneidende Schraube 1 aus beispielsweise Stahl. Sie weist einen zylindrischen Schraubenschaft 2 mit einer kegelförmigen Schraubenspitze 3 an einem in einer Einschraubrichtung vorderen Ende des Schraubenschafts 2 und einem Schraubenkopf 4 an einem, bezogen auf die Einschraubrichtung E hinteren Ende des Schraubenschafts 2 auf. Im Ausführungsbeispiel ist der Schraubenkopf 4 ein Senkkopf mit einem in der Zeichnung nicht sichtbaren Innenstern (Torx) zu einem Drehantrieb der Schraube 1, was allerdings nicht zwingend für die Erfindung ist. Als Schraubengewinde 5 weist die Schraube 1 ein selbstschneidendes Spitzgewinde auf, das bei einem Einschrauben der Schraube 1 in einen (nicht dargestellten) Ankergrund aus beispielsweise Holz oder Kunststoff ein Gegengewinde in den Ankergrund schneidet. Das Schraubengewinde 5 ist nicht Teil des Schraubenschafts 2 oder der Schraubenspitze 3 und erstreckt sich von oder nahezu von einem in der Einschraubrichtung E vorderen Ende der Schraube 1 über die Schraubenspitze 3 und einen großen Teil einer Länge des Schraubenschafts 2 bis nahe an den Schraubenkopf 4. Es sind allerdings auch Ausführungen der Schraube 1 möglich, bei denen das Schraubengewinde 5 in einem größeren Abstand vom Schraubenkopf 4 endet und der Schraubenschaft 2 einen längeren Abschnitt ohne Schraubengewinde 5 aufweist (nicht dargestellt).

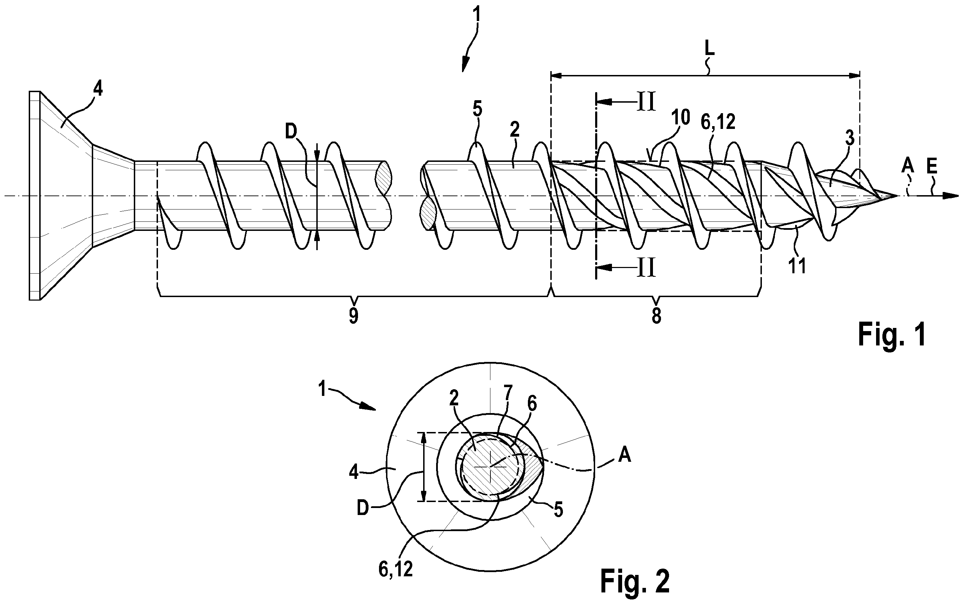

In einem vorderen Gewindeabschnitt 8 weist der Schraubenschaft 2 drei Schneiden 6 auf. Im Ausführungsbeispiel sind die Schneiden 6 durch Kanten an im Querschnitt sägezahnförmigen Nuten 7 gebildet (Figur 2), die sich im vorderen Gewindeabschnitt 8 wendelförmig um den Schraubenschaft 2 winden. Die Nuten 7 und die Schneiden 6 weisen im Ausführungsbeispiel dieselbe Steigungsrichtung, jedoch eine andere Steigung als das Schraubengewinde 5 auf, so dass sie in einem Winkel zum Schraubengewinde 5 verlaufen. An Kreuzungsstellen mit den Schneiden 6 geht das Schraubengewinde 5 durch, das heißt, die Nuten 7 werden durch das Schraubengewinde 5 an den Kreuzungsstellen unterbrochen. Möglich ist auch eine entgegengesetzte Steigung der Nuten 7 mit den Schneiden 6 als das Schraubengewinde 5 (nicht dargestellt). Die Schneiden 6 sind so ausgerichtet, dass sie bei einem Einschrauben der Schraube 1 in einen Ankergrund schneiden. Der Schraubenschaft 2 weist im vorderen Gewindeabschnitt 8 mit den Schneiden 6 bis vorn zu einem Übergang in die Schraubenspitze 3 eine gedachte zylindrische Mantelfläche 10 mit demselben Durchmesser D auf wie in einem hinteren Gewindeabschnitt 9. Der hintere Gewindeabschnitt 9 schließt sich entgegen der Einbringrichtung E an den vorderen Gewindeabschnitt 8 an. Im hinteren Gewindeabschnitt 9 weist der Schraubenschaft 2 das Schraubengewinde 5, jedoch keine Nuten 7 und keine Schneiden 6 auf. Mit anderen Worten: Abgesehen von den die Schneiden 6 bildenden Nuten 7 ist der Schraubenschaft 2 von seinem hinteren, dem Schraubenkopf 4 zugewandten Ende, bis zu seinem vorderen, der Schraubenspitze 3 zugewandten Ende zylindrisch. Die Schneiden 6 reichen radial bis zur zylindrischen Mantelfläche 10 des Schraubenschafts 2. Sie erstrecken sich also in radialer Richtung gleich weit wie die zylindrische Mantelfläche 10. Möglich wäre auch eine geringere radiale Erstreckung des Schraubenschafts 2 in dem vorderer Gewindeabschnitt 8 und, unabhängig von der radialen Erstreckung, beispielsweise im Querschnitt sägezahnförmige Rippen, deren äußere Kanten die Schneiden 6 bilden (nicht dargestellt). Auch in diesem Fall reichen die Schneiden 6 radial bis zu einer gedachten zylindrischen Mantelfläche 10 des Schraubenschafts 2 im hinteren Gewindeabschnitt (nicht dargestellt). Die drei Schneiden 6 beginnen vor dem vorderen Ende des Schraubenschafts 2, nämlich etwa am vorderen Ende des mittleren Drittels der Schraubenspitze 3, sind gleich lang und erstrecken sich über die gleiche axiale Länge L, die etwa dem viereinhalbfachen des Durchmessers D der Mantelfläche 10 entspricht. Das Schraubengewinde 5 erstreckt sich weiter am Schraubenschaft 2 nach hinten in Richtung des Schraubenkopfs 4 als die Schneiden 6. Im Ausführungsbeispiel reicht das Schraubengewinde 5, wie erwähnt, bis nahe an den Schraubenkopf 4. Es sind allerdings auch Ausführungen der Schraube 1 mit einem gewindelosen Schaftabschnitt zwischen dem Schraubenkopf 4 und dem Schraubengewinde 5 möglich (nicht dargestellt). In jedem Fall erstreckt sich das Schraubengewinde 5 weiter nach hinten als die Schneiden 6. Im Ausführungsbeispiel weist die Schraube 1 drei über einen Umfang verteilte Nuten 7 zur Bildung der Schneiden 6 im vorderen Gewindeabschnitt 8 auf. Die Nuten 7 haben ein gewundenes Dreiecksprofil, das auch als sägezahnförmig bezeichnet werden kann. Betrachtet man das Dreiecksprofil in Umfangsrichtung der Schraube 1, und zwar in der Drehrichtung beim Einschrauben der Schraube 1, so springt die Kontur vom Durchmesser D unter Bildung einer Kante 12 auf einen geringeren radialen Abstand zur Längsachse A zurück und steigt dann über etwa 90 Grad wieder zu dem Durchmesser D an. Die Kanten 12 bilden die Schneiden 6.

Im Bereich der Schraubenspitze 3 sind die Schneiden 6 nicht durch Nuten, sondern durch Rippen 11 gebildet, die vom Kern-Querschnitt der Schraubenspitze 3 abstehen und ein dreieckiges Profil aufweisen. Die Rippen 11 gehen am Übergang von der Schraubenspitze 3 zum Schraubenschaft 2 in die Kanten 12 über, so dass jeweils eine im Wesentlichen durchgehende Scheide 6 gebildet ist. Die Rippen 11 haben dabei eine radiale Erstreckung, die maximal dem Durchmesser D entspricht. Sie könnten sich jedoch auch etwas weiter radial erstrecken, wobei der Überstand über den Durchmesser D insbesondere zwischen 2 und 10 Prozent bezogen auf den Durchmesser D beträgt.

Die Schraubenspitze 3, die Rippen 11, das Schraubengewinde 5 und die sägezahnförmigen Nuten 7 sind durch Umformen des zunächst zylindrischen Rohlings für den Schraubenschaft 2 hergestellt. Dabei wird Werkstoff zur Bildung der Nuten 7 und der Schraubenspitze 3 verdrängt. Dieser Werkstoff wird in das Schraubengewinde 5 und in die Rippen 11 verdrängt. Das Schraubengewinde 5 weist deswegen im vorderen Gewindeabschnitt 8 einen größeren Querschnitt auf als im hinteren Gewindeabschnitt 9. Im Bereich der Schraubenspitze 3 ist der Querschnitt des Schraubengewindes 5 noch größer. Im Ausführungsbeispiel ist das Schraubengewinde 5 im vorderen Gewindeabschnitt 8 breiter und höher als im hinteren Gewindeabschnitt 9. "Höher" bedeutet einen größeren Gewindedurchmesser. "Breiter" meint eine größere Ausdehnung senkrecht zur Längserstreckung und senkrecht zur Höhe des Schraubengewindes 5. Im Bereich der Schraubenspitze 3 ist das Schraubengewinde 5 noch breiter und höher als im vorderen Gewindeabschnitt 8. Im vorderen Gewindeabschnitt 8 weist das Schraubengewinde 5 einen Flankenwinkel von 50° und im hinteren Gewindeabschnitt 9 einen Flankenwinkel von 40° auf. Im Bereich der Schraubenspitze 3 kann der Flankenwinkel noch größer sein.

Bei einem Einschrauben der Schraube 1 in einen nicht dargestellten Ankergrund aus beispielsweise Holz oder Kunststoff ohne Vorbohren formt zunächst die Schraubenspitze 3 ein Loch in den Ankergrund, das die Schneiden 6 auf Durchmesser D des Schraubenschafts 2 erweitern. Anders ausgedrückt: Die Schneiden 6 schneiden ein Kernloch mit dem Durchmesser D des Schraubenschafts 2 frei. Ist der Ankergrund vorgebohrt oder weist auf andere Weise ein Loch auf, dessen Durchmesser kleiner als der Durchmesser D des Schraubenschafts 2 der Schraube 1 ist, weiten die Schneiden 6 das Loch ebenfalls auf den Durchmesser D des Schraubenschafts 2 auf, das heißt, sie schneiden ein Kernloch mit dem Durchmesser D des Schraubenschafts 2 frei. Es weitet zwar die Schraubenspitze 3 das Loch im Ankergrund auf den Durchmesser des Schraubenschafts 2 auf, jedoch drückt eine Wand des Lochs durch Elastizität des Ankergrunds gegen den Schraubenschaft 2. Beim Einschrauben schaben oder schneiden die Schneiden 6 Werkstoff von der Wand des Lochs, so dass die Wand des Lochs schwächer gegen den Schraubenschaft 2 drückt und das Einschraubmoment der Schraube 1 in den Ankergrund verringert ist. Das Kernloch, das die Schneiden 6 frei schneiden, vermindert beim Einschrauben der Schraube 1 in einen Ankergrund eine Reibung zwischen dem Schraubenschaft 2 und dem Ankergrund und verringert dadurch ein Antriebsmoment, das zum Einschrauben der Schraube 1 in den Ankergrund notwendig ist. Die Schneiden 6 schneiden kein Loch mit einem größeren Durchmesser als dem Durchmesser D des Schraubenschafts 2, so dass kein den Schraubenschaft 2 im Ankergrund umschließender Zwischenraum entsteht. Das ist ein Vorteil beim Aufspreizen eines Spreizdübels aus Kunststoff durch Einschrauben der erfindungsgemäßen Schraube 1, weil ihr Schraubenschaft 2 den Spreizdübel aufgespreizt hält (nicht dargestellt).

### Bezugszeichenliste

- 1: Schraube
- 2: Schraubenschaft
- 3: Schraubenspitze
- 4: Schraubenkopf
- 5: Schraubengewinde
- 6: Schneide
- 7: sägezahnförmige Nut
- 8: vorderer Gewindeabschnitt
- 9: hinterer Gewindeabschnitt
- 10: Mantelfläche
- 11: Rippe
- 12: Kante
- A: Längsachse der Schraube 1
- D: Durchmesser
- E: Einbringrichtung
- L: axiale Länge, über die sich die Schneide 6 erstreckt

## Patentansprüche

1. Schraube, mit einem Schraubenschaft (2), mit einer Schraubenspitze (3), die sich an ein vorderes Ende des Schraubenschafts (2) anschließt, mit einem Schraubengewinde (5), das sich von der Schraubenspitze (3) aus zumindest über einen Teil einer Länge des Schraubenschafts (2) erstreckt, und mit mindestens einer in einem Winkel zum Schraubengewinde (5) verlaufenden Schneide (6), die sich von der Schraubenspitze (3) aus entlang eines vorderen Gewindeabschnitts (8) weniger weit über den Schraubenschaft (2) erstreckt als das Schraubengewinde (5), derart, dass sich an den vorderen Gewindeabschnitt (8) ein schneidenfreier hinterer Gewindeabschnitt (9) anschließt, und wobei die Schneide (6) bei einem Einschrauben der Schraube (1) in einen Ankergrund ein Kernloch frei schneidet, **dadurch gekennzeichnet, dass** die mindestens eine Schneide (6) sich zumindest im vorderen Gewindeabschnitt (8) in radialer Richtung maximal gleich weit erstreckt wie eine gedachte, zylindrische Mantelfläche (10) eines Kerns im hinteren Gewindeabschnitt (9).

2. Schraube nach Anspruch 1, **dadurch gekennzeichnet, dass** sich die mindestens eine Schneide (6) vom vorderen Ende des Schraubenschafts (2) über eine axiale Länge (L) des Schraubenschafts (2) erstreckt, die gleich dem ein- bis sechsfachen, insbesondere dem drei- bis fünffachen, des Durchmessers (D) des Schraubenschafts (2) im hinteren Gewindeabschnitt (9) ist.

3. Schraube nach Anspruch 1 oder 2, **dadurch gekennzeichnet, dass** das Schraubengewinde (5) an Kreuzungsstellen mit der mindestens einen Schneide (6) durchgeht.

4. Schraube nach einem der Ansprüche 1 bis 3, **dadurch gekennzeichnet, dass** die mindestens eineSchneide (6) quer oder schräg zum Schraubengewinde (5) verläuft.

5. Schraube nach einem der vorhergehenden Ansprüche, **dadurch gekennzeichnet, dass** die mindestens eine Schneide (6) wendelförmig, aber mit einer anderen Steigung als das Schraubengewinde (5) verläuft.

6. Schraube nach einem der vorhergehenden Ansprüche, **dadurch gekennzeichnet, dass** ein Querschnitt des Schraubengewindes (5) im vorderen Gewindeabschnitt (8) einen größeren Querschnitt aufweist als im hinteren Gewindeabschnitt (9).

7. Schraube nach einem der vorhergehenden Ansprüche, **dadurch gekennzeichnet, dass** das Schraubengewinde (5) im vorderen Gewindeabschnitt (8) höher als im hinteren Gewindeabschnitt (9) ist.

8. Schraube nach einem der vorhergehenden Ansprüche, **dadurch gekennzeichnet, dass** das Schraubengewinde (5) im vorderen Gewindeabschnitt (8) breiter als im hinteren Gewindeabschnitt (9) ist.

9. Schraube nach einem der vorhergehenden Ansprüche, **dadurch gekennzeichnet, dass** der Schraubenschaft (2) im vorderen Gewindeabschnitt (8) und/oder im hinteren Gewindeabschnitt (9) zylindrisch ist.

10. Schraube nach einem der vorhergehenden Ansprüche, **dadurch gekennzeichnet, dass** die Schraube (1) drei oder mehr Schneiden (6) aufweist.

11. Schraube nach Anspruch 10, **dadurch gekennzeichnet, dass** die Schneiden (6) innerhalb des Bereichs der Schraubenspitze (3), insbesondere im axial mittleren Drittel der Schraubenspitze (3), beginnen, gleich lang sind und sich über die gleiche axiale Länge (L) erstrecken.

12. Schraube nach Anspruch 11, **dadurch gekennzeichnet, dass** die Schneiden (6) im Bereich der Schraubenspitze (3) von Rippen (11) und im Bereich des Schraubenschafts (2) durch Kanten (12) an Nuten (7) gebildet sind.

## Claims

1. Screw, having a screw shank (2), having a screw tip (3) which adjoins a forward end of the screw shank (2), having a screw thread (5) which, starting from the screw tip (3), extends at least over a portion of a length of the screw shank (2), and having at least one cutting edge (6) which runs at an angle with respect to the screw thread (5) and which, starting from the screw tip (3), extends along a forward threaded portion (8) less far over the screw shank (2) than does the screw thread (5) in such a way that the forward threaded portion (8) is adjoined by a cutting-edge-free rear threaded portion (9), and wherein the cutting edge (6) cuts out a core hole when the screw (1) is screwed into an anchoring substrate, **characterised in that** the at least one cutting edge (6), at least in the forward threaded portion (8), extends in a radial direction maximally to the same extent as a notional, cylindrical envelope surface (10) of a core in the rear threaded portion (9).

2. Screw according to claim 1, **characterised in that** the at least one cutting edge (6) extends from the forward end of the screw shank (2) over an axial length (L) of the screw shank (2) that is equal to from one to six times, especially from three to five times, the diameter (D) of the screw shank (2) in the rear threaded portion (9).

3. Screw according to claim 1 or 2, **characterised in that** the screw thread (5) is continuous at points of intersection with the at least one cutting edge (6).

4. Screw according to any one of claims 1 to 3, **characterised in that** the at least one cutting edge (6) runs transversely or obliquely with respect to the screw thread (5).

5. Screw according to any one of the preceding claims, **characterised in that** the at least one cutting edge (6) runs helically, but with a different pitch from the screw thread (5).

6. Screw according to any one of the preceding claims, **characterised in that** a cross-section of the screw thread (5) has a larger cross-section in the forward threaded portion (8) than in the rear threaded portion (9).

7. Screw according to any one of the preceding claims, **characterised in that** the screw thread (5) is higher in the forward threaded portion (8) than in the rear threaded portion (9).

8. Screw according to any one of the preceding claims, **characterised in that** the screw thread (5) is wider in the forward threaded portion (8) than in the rear threaded portion (9).

9. Screw according to any one of the preceding claims, **characterised in that** the screw shank (2) is cylindrical in the forward threaded portion (8) and/or in the rear threaded portion (9).

10. Screw according to any one of the preceding claims, **characterised in that** the screw (1) has three or more cutting edges (6).

11. Screw according to claim 10, **characterised in that** the cutting edges (6) begin inside the region of the screw tip (3), especially in the axially central third of the screw tip (3), are of the same length and extend over the same axial length (L).

12. Screw according to claim 11, **characterised in that** the cutting edges (6) are formed by ribs (11) in the region of the screw tip (3) and by edges (12) on grooves (7) in the region of the screw shank (2).

## Revendications

1. Vis, comprenant une tige de vis (2), une pointe de vis (3) qui se raccorde à une extrémité avant de la tige de vis (2), un filetage de vis (5) qui s'étend depuis la pointe de vis (3) au moins sur une partie d'une longueur de la tige de vis (2), et au moins une arête de coupe (6) s'étendant suivant un certain angle par rapport au filetage de vis (5), qui s'étend depuis la pointe de vis (3) le long d'une portion de filetage avant (8) moins loin sur la tige de vis (2) que le filetage de vis (5), de telle sorte qu'une portion de filetage arrière sans arête de coupe (9) se raccorde à la portion de de filetage avant (8), et l'arête de coupe (6), lors d'un vissage de la vis (1), découpant librement un avant-trou dans un support d'ancrage, **caractérisée en ce que** l'au moins une arête de coupe (6) s'étend au moins dans la portion de filetage avant (8) dans la direction radiale au maximum sur une même longueur qu'une surface d'enveloppe cylindrique imaginaire (10) d'un noyau dans la portion de filetage arrière (9).

2. Vis selon la revendication 1, **caractérisée en ce que** l'au moins une arête de coupe (6) s'étend depuis l'extrémité avant de la tige de vis (2) sur une longueur axiale (L) de la tige de vis (2) qui est égale à une à six fois, en particulier à trois à cinq fois le diamètre (D) de la tige de vis (2) de la portion de filetage arrière (9).

3. Vis selon la revendication 1 ou 2, **caractérisée en ce que** le filetage de vis (5) se prolonge, à des endroits d'intersection, par l'au moins une arête de coupe (6).

4. Vis selon l'une quelconque des revendications 1 à 3, **caractérisée en ce que** l'au moins une arête de coupe (6) s'étend transversalement ou obliquement par rapport au filetage de vis (5).

5. Vis selon l'une quelconque des revendications précédentes, **caractérisée en ce que** l'au moins une arête de coupe (6) s'étend sous forme hélicoïdale, mais avec un autre pas que le filetage de vis (5).

6. Vis selon l'une quelconque des revendications précédentes, **caractérisée en ce qu'**une section transversale du filetage de vis (5) dans la portion de filetage (8) présente une plus grande section transversale que dans la portion de filetage arrière (9).

7. Vis selon l'une quelconque des revendications précédentes, **caractérisée en ce que** le filetage de vis (5) est plus haut dans la portion de filetage avant (8) que dans la portion de filetage arrière (9).

8. Vis selon l'une quelconque des revendications précédentes, **caractérisée en ce que** le filetage de vis (5) est plus large dans la portion de filetage avant (8) que dans la portion de filetage arrière (9).

9. Vis selon l'une quelconque des revendications précédentes, **caractérisée en ce que** la tige de vis (2) est cylindrique dans la portion de filetage avant (8) et/ou dans la portion de filetage arrière (9).

10. Vis selon l'une quelconque des revendications précédentes, **caractérisée en ce que** la vis (1) présente trois ou plus de trois arêtes de coupe (6).

11. Vis selon la revendication 10, **caractérisée en ce que** les arêtes de coupe (6) commencent à l'intérieur de la région de la pointe de vis (3), en particulier dans le tiers axial central de la pointe de vis (3), sont de même longueur, et s'étendent sur la même longueur axiale (L).

12. Vis selon la revendication 11, **caractérisée en ce que** les arêtes de coupe (6) sont formées dans la région de la pointe de vis (3) par des nervures (11) et dans la région de tige de vis (2) par des arêtes (12) au niveau de rainures (7).
